Europäisches Patentamt

European Patent Office

Office européen des brevets

(19)

(11) Veröffentlichungsnummer: **0 001 836**
**B1**

(12) **EUROPÄISCHE PATENTSCHRIFT**

(45) Veröffentlichungstag der Patentschrift:
**29.09.82**

(21) Anmeldenummer: 78101290.1

(22) Anmeldetag: **02.11.78**

(51) Int. Cl.³: **F 16 S 1/02,** A 47 B 47/00,
F 16 B 12/20, B 65 D 6/16

(54) **Aus einzelnen Wandelementen zusammensetzbares Körperelement.**

(30) Priorität: 08.11.77 **DE 2749874**
19.07.78 **DE 2831652**

(43) Veröffentlichungstag der Anmeldung:
**16.05.79 Patentblatt 79/10**

(45) Bekanntmachung des Hinweises auf die Patenterteilung:
**29.09.82 Patentblatt 82/39**

(84) Benannte Vertragsstaaten:
**BE CH FR GB NL SE**

(56) Entgegenhaltungen:
**FR-A-936 551
FR-A-2 062 731
FR-A-2 137 289
FR-A-2 242 887
US-A-3 540 613
US-A-3 944 310**

(73) Patentinhaber: **Schaefer, Rudolf, Brauerstrasse 35,
D-4100 Duisburg 1 (DE)**

(72) Erfinder: **Schaefer, Rudolf, Brauerstrasse 35,
D-4100 Duisburg 1 (DE)**

(74) Vertreter: **Cohausz, Werner, Dipl.-Ing. et al,
Schumannstrasse 97, D-4000 Düsseldorf (DE)**

Aus einzelnen Wandelementen zusammengesetztes Körperelement

Die Erfindung betrifft ein aus einzelnen Wandelementen zusammengesetztes Körperelement mit an den Stossstellen ausgebildeten Nut-Feder-Verbindungen und mit Spannorganen, mittels derer die Nut-Feder-Verbindungen in der Verbindungsrichtung zusammengehalten sind, wobei die Nuten und Federn jeweils einen angenähert trapezförmigen Querschnitt haben, die Nut-Feder-Verbindung durchgehend über die Ränder der zu verbindenden Wandelemente verläuft und in bestimmten Eckbereichen von Wandelementen eine Feder in eine Nut und eine Nut in eine Feder derart übergehen, dass an den Stirnseiten angeordnete Nut-Feder-Verbindungen in Nut-Feder-Verbindungen an den angrenzenden Stirn- bzw. Seitenflächen überwechseln.

Nut-Feder-Verbindungen sind in vielfacher Form bekannt. Beim Bau von Möbeln, Kisten oder Behältern z.B. werden die einzelnen Wandelemente mit Nut-Feder-Verbindungen versehen und unter Hinzugabe von Leim zusammengefügt. Die Nuten und Federn haben meist einen rechteckigen Querschnitt, gelegentlich einen trapez- oder keilförmigen Querschnitt.

Belastungen, die in einer zur Längsachse der Nuten und Federn quer verlaufenden Richtung auftreten, können von den Nuten und Federn aufgrund ihres formschlüssigen Ineinandergreifens in dieser Richtung aufgenommen werden. Da die Nuten und Federn aber aufgrund von Fertigungsungenauigkeiten niemals so genau bemessen sind, dass ständig eine die Wandelemente zusammenhaltende Reibungswirkung vorhanden ist, muss zusätzlich eine Verleimung, eine Verschraubung oder dergleichen erfolgen, wenn das aus den Wandelementen zusammengesetzte Körperelement ausreichend stabil sein soll. Ohne die Anwendung einer zusätzlichen Verleimung oder Verschraubung würde die Klemmwirkung auch bei genauester Fertigung bereits aufgrund der Materialermüdung bald nachlassen. Es würde auch eine Verschiebbarkeit in Längsrichtung der Nuten und Federn eintreten, wenn dies nicht durch das Verleimen oder Verschrauben oder durch andere Massnahmen verhindert wird.

Die für den Bau von diesen Körperelementen bisher bekannten Nut-Feder-Verbindungen erfordern zum Zusammensetzen der Wandelemente immer eine fachgerechte handwerkliche Montage, zu der Werkzeuge und andere Hilfsmittel verwendet werden müssen. Die derart zusammengesetzten Körperelemente sind im Verbindungsbereich zwischen den Wandelementen nicht in ausreichendem Masse luft- oder wasserdicht, wenn hierfür nicht weitere zusätzliche Massnahmen getroffen werden. Diese bekannten Nut-Feder-Verbindungen können nicht als lösbare Verbindungen angesehen werden, die ein mehrfaches oder sogar häufiges Zusammensetzen und Auseinandernehmen des jeweiligen Körperelementes zulassen. Dies betrifft nicht nur den hierzu erforderlichen Arbeitsaufwand, sondern auch den im Bereich der Verbindungen auftretenden Materialverschleiss. Auch lassen sich Nuten und Federn von rechteckigem Querschnitt in einfacher Weise und ohne eine Gefahr von Beschädigungen an den Kanten nur dann zusammensetzen, wenn beim Zusammensetzen die Wandelemente jeweils in einer ganz bestimmten Lage gehalten werden. Sobald irgendeine Verkantung vorhanden ist, wird eine entsprechend grössere Kraft zum Zusammensetzen benötigt, und es können Beschädigungen an den Kanten der Nuten und Federn auftreten.

Aus der US-A-3 944 310 ist ein aus Wandelementen zusammensetzbarer Hohlkörper bekannt, dessen Nuten in den Eckbereichen in dazu rechtwinklig verlaufende Nuten übergehen. Die aussen aufgesetzten Wandteile müssen in den Ecken stirnseitig schräge Anlageflächen aufweisen, die nur durch ein Aneinanderkleben dicht werden. Eine solche Konstruktion lässt sich nachträglich nicht mehr demontieren und neu verwenden.

Ein aus einzelnen Wandelementen zusammengesetztes Körperelement entsprechend dem Oberbegriff des Anspruchs 1 ist aus der US-A-3 898 779 bekannt. Bei diesem bekannten Körperelement sind zur Bildung der Ecken besondere Eckwandelemente vorgesehen, die aus zwei rechtwinklig, unlösbar aneinandergesetzten Wandabschnitten bestehen. Die Vorfertigung solcher Eckwandelemente ist aufwendig. Auch sind diese beim Transport sperrig und beschädigungsanfällig. Die Übergänge in den Eckbereichen von Nuten in Federn und umgekehrt sind nicht kontinuierlich, so dass im zusammengesetzten Zustand Erweiterungen bestehen, die die Anlageflächen der Flanken verkleinern und in die eine einliegende Dichtschnur seitlich ausweichen würde, so dass eine hohe Dichtigkeit nicht erzielt werden kann. Ferner kann durch eine zu frühe Anlage des Federrückens am Nutenboden eine sichere Anlage der Flanken aneinander verhindert werden, so dass die Stabilität leidet. Dies geschieht insbesondere aufgrund der üblichen Fertigungsungenauigkeiten.

Aufgabe der Erfindung ist es, ein Körperelement der eingangs genannten Art derart zu verbessern, dass alle Wandelemente in vergleichsweise einfacher Art herstellbar und transportierbar sind, eine hohe Dichtigkeit der Verbindungsstellen erreicht und eine grosse Stabilität des Körperelements erzielt wird.

Diese Aufgabe wird erfindungsgemäss dadurch gelöst, dass die Nuten und Federn so bemessen sind, dass die vom Spannorgan ausgeübte Kraft im wesentlichen zwischen den Flanken der Nuten und Federn übertragen wird, dass jeweils die Feder einer Seitenfläche bzw. Stirnfläche in eine Nut an einer angrenzenden Stirnseite bzw. eine Nut an einer Seitenfläche bzw. Stirnfläche in eine Feder an der angrenzenden Stirnseite derart übergeht, dass die Übergänge von den Nutenwänden zu den entsprechenden Federrücken in einem Winkel von 45° verlaufende, einen kontinuierlichen Nutenquerschnitt im Übergangsbereich gewährleistende Wangen bilden, und dass die Querschnitte zumindest der mittleren Nuten und Federn so bemessen sind, dass bei aneinanderliegenden Flanken der Nuten und Federn zwischen dem Nutboden und den Federrücken ein Abstand für einen Dichtstreifen verbleibt.

Die Nut-Feder-Verbindungen sind auch bei den Eckwandelementen unmittelbar an nur einer Wandfläche angeordnet, so dass eine leichte Herstellung aus flachen Wandelementen möglich ist. Auf einen weiteren, in einer anderen Ebene angeordneten Wandabschnitt kann bei den Eckwandelementen verzichtet werden.

Obwohl rechtwinklige Eckwandelemente nicht erforderlich sind, wird eine hohe Stabilität und Formsteifigkeit erreicht. Die Nut-Feder-Verbindungen sind auch in den Eckbereichen umlaufend durchgeführt, so dass eine hohe Dichtigkeit, insbesondere eine Druckdichtigkeit, erzielt wird. Derartige Körperelemente können als wasser- und luftdicht gelten.

Besonders einfach lassen sich die Verbindungen und Wandelemente dann herstellen, wenn die Teile einer Nut-Feder-Verbindung jeweils Bestandteil eines vorgefertigten Profils sind.

Vorzugsweise wird vorgeschlagen, dass die Rückseite des vorgefertigten Profils eine in eine entsprechende Nut im Eckwandelement eingreifende Feder aufweist, während es im übrigen flach auf der betreffenden Seitenfläche des Eckwandelements aufliegt. Hierdurch wird bei einfacher Herstellung den Profilen ein sicherer Halt in den Eckwandelementen gegeben.

Weitere vorteilhafte Ausgestaltungen der Erfindung und weitere durch die Erfindung erzielbare Vorteile ergeben sich aus der nachfolgenden Beschreibung von Ausführungsbeispielen anhand einer Zeichnung. Im einzelnen zeigen:

Fig. 1 in Form eines Sprengbildes eine perspektivische Teildarstellung zweier zu verbindender Wandelemente;

Fig. 2 die in Fig. 1 dargestellten Wandelemente in zusammengesetzter Stellung;

Fig. 3 eine perspektivische Teilansicht eines weiteren, mit den beiden anderen Wandelementen zu verbindenden Wandelementes;

Fig. 4 in einer der Fig. 1 entsprechenden Darstellung zwei Wandelemente mit einer anderen Verteilung der Nuten und Federn;

Fig. 5 die in Fig. 4 dargestellten Wandelemente in zusammengesetzter Stellung;

Fig. 6 eine weitere Ausführungsform der Nut-Feder-Verbindung zwischen zwei Wandelementen;

Fig. 7 ein als Schrank ausgebildetes Körperelement in Vorderansicht;

Fig. 8 eine Seitenansicht zu der Darstellung nach Fig. 7;

Fig. 9 eine Ansicht zweier durch ein Scharnier verbundener Rahmenelemente;

Fig 10 eine Ansicht auf eines der Rahmenelemente nach Fig. 9 aus einer um 90° gedrehten Richtung;

Fig. 11 und Fig. 12 jeweils eine Teilansicht eines Wandelementes von kreisförmigem Querschnitt, jeweils gesehen in Richtung auf eine der beiden Stirnflächen.

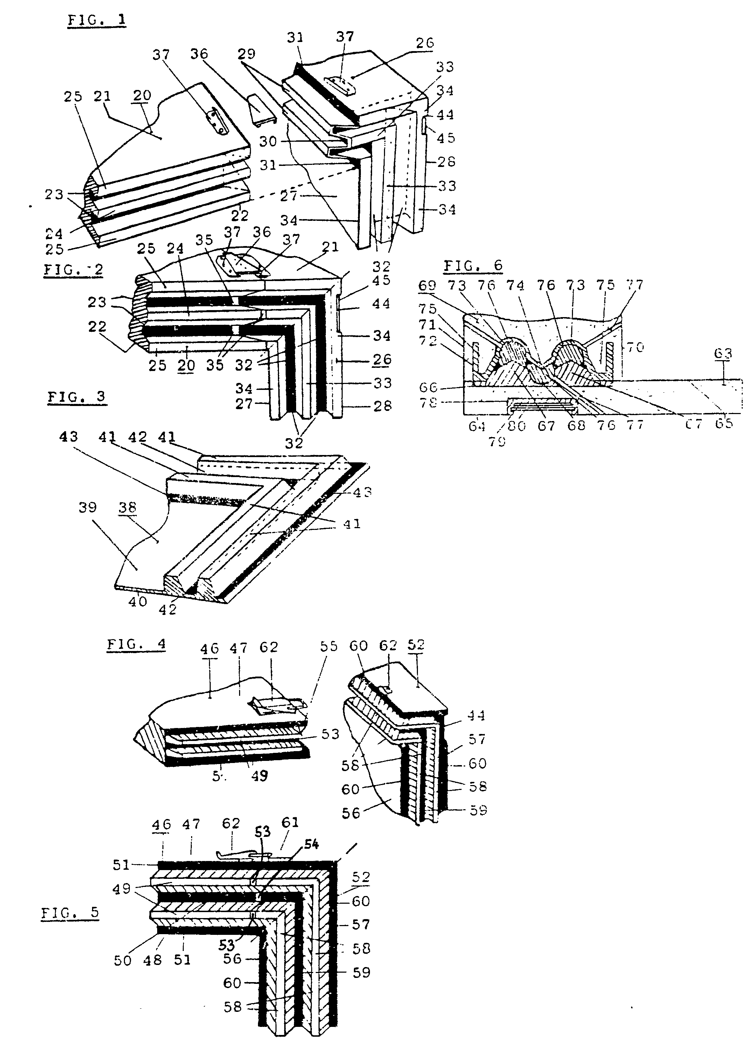

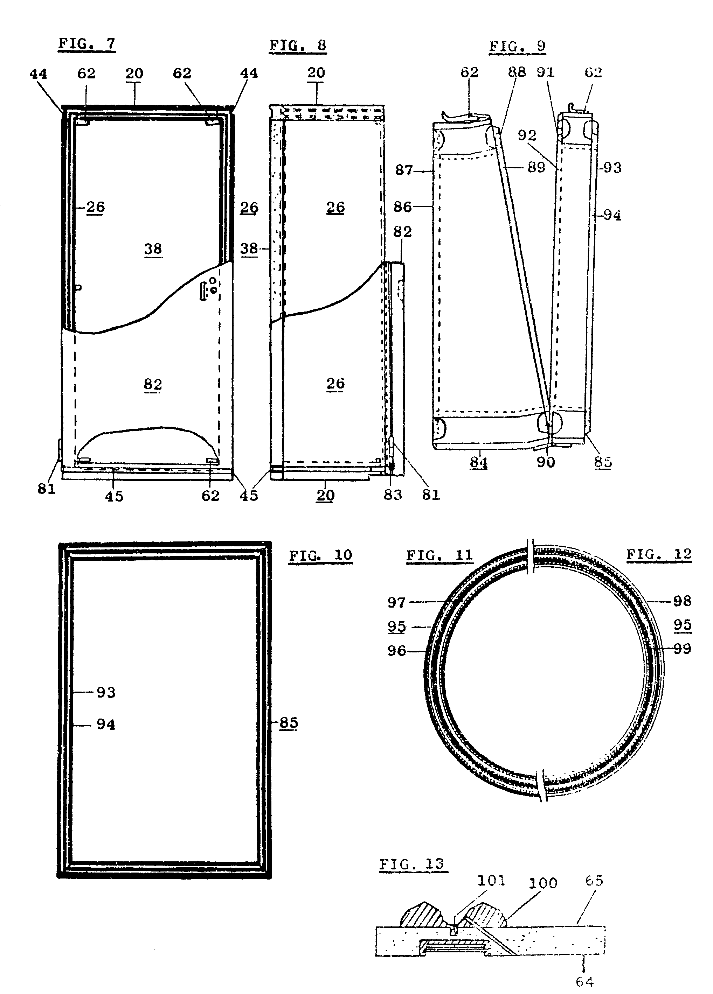

Fig. 13 eine Variation zu der Ausführung nach Fig. 6. Von den beiden in den Fig. 1 und 2 dargestellten Wandelementen hat das Wandelement 20 zwei Seitenflächen 21 und 22. Entlang der einen Schmalseite verlaufen zwei Nuten 23, zwischen denen sich eine Feder 24 erstreckt. Zu den Seitenflächen 21 und 22 hin schliessen sich zwei Halbfedern 25 an, die jeweils an den Aussenseiten in eine der Seitenflächen 21 bzw. 22 übergehen und die jeweils etwa den halben Querschnitt der Feder 24 haben. In der gleichen Ausbildung und Anordnung verlaufen die Nuten 23 und die Feder 24 sowie die Halbfedern 25 auch auf der in diesem Eckbereich angrenzenden Schmalseite.

Das andere Wandelement 26 hat ebenfalls zwei Seitenflächen 27 und 28. Entlang der einen Längskante des Wandelementes 26 sind im Randbereich der Seitenfläche 27 zwei Federn 29 ausgebildet, zwischen denen sich eine Nut 30 erstreckt.

Zur Aussenseite der beiden Federn 29 hin sind Halbnuten 31 ausgebildet, die ihrerseits jeweils etwa den halben Querschnitt der Nut 30 haben und in ihrer Anordnung und Bemessung auf die Halbfedern 25 abgestimmt sind. Die untere Halbnut 31 besteht hierbei eigentlich nur aus einem Freiraum, ohne dass sie einen besonderen Kantenverlauf erkennen lässt.

Die nach oben weisende Schmalseite des Wandelementes 26 hat einen ebenen, geschlossenen Verlauf und geht nach dem Zusammensetzen der Wandelemente 20 und 26 in die Seitenfläche 21 des Wandelementes 20 über.

An der nach vorne weisenden Schmalseite hat das Wandelement 26 zwei Nuten 32, zwischen denen eine Feder 33 verläuft. Zu den Seitenflächen 27 und 28 hin schliesst jeweils wiederum eine Halbfeder 34 an.

Im Eckbereich geht die linke Halbfeder 34 in die praktisch nur theoretisch vorhandene Halbnut 31 über, während die Feder 33 in ihrem oberen, etwa waagrecht verlaufenden Teil am Ende schräg abgeschnitten ist, so dass der Rücken der Feder 33 mit dem Boden der Nut 30 etwa rechtwinklig aneinanderstösst. Dasselbe gilt für das Aneinanderstossen der Rücken der Federn 29 mit den Böden der Nuten 32. Diese Übergänge verlaufen alle in Form einer Abschrägung unter einem Winkel von 45°. Ebenso geht der Boden der oberen Halbnut 31 in einem rechten Winkel in den Rücken der Halbfeder 34 über.

Fig. 2 lässt erkennen, wie die Nut-Feder-Verbindungen im einzelnen ineinandergreifen, wenn die Wandelemente 26 und 20 zusammengesetzt sind. Die Nuten 32 an der Schmalseite des Wandelementes 26 gehen dabei in die Nuten 23 an der angrenzenden Schmalseite des Wandelementes 20 über. Entsprechendes gilt für den Übergang der Halbfedern 25 in die Halbfedern 34 und für den Übergang der Feder 24 in die Feder 33.

Es ist ferner zu erkennen, dass die Federn 29 und die Nuten 23 in ihren Abmessungen so aufeinander abgestimmt sind, dass zwischen dem Rükken einer Feder 29 und dem Boden einer Nut 23 jeweils ein Querschnittsteil 35 frei bleibt, in den eine hier nicht dargestellte Dichtung eingelegt werden kann.

Alle Nuten und Halbnuten, Federn und Halbfedern haben jeweils einen angenähert kegelstumpfförmigen Querschnitt und sind so bemessen, dass eine die Wandelemente 20 und 26 in Verbindungsrichtung zusammendrückende Kraft im wesentlichen nur an den Nut- und Federflanken übertragen wird. Ein nur unwesentlicher Teil dieser Kraft dient zum Zusammendrücken der in den Querschnittsteil 35 jeweils eingelegten Dichtungen. Auf die zwischen den Nut- und Federflanken wirkende Kraft und damit auf die Grösse der zwischen den Nut-Feder-Verbindungen erzielbaren Reibung hat dies jedoch keinen Einfluss.

Die zum Zusammendrücken der Wandelemente 20 und 26 in Verbindungsrichtung dienende Kraft kann auf unterschiedliche Weise erzeugt werden. Als Beispiel hierfür ist bei der Ausführungsform nach den Fig. 1 und 2 ein Keilverschluss vorgesehen, der durch ein an beiden Seiten hakenförmig umgebogenes Schliessstück 36 und zwei ebenfalls hakenförmig umgebogene Gegenstücke 37 gebildet ist, von denen das eine auf der Seitenfläche 21 des Wandelementes 20 und das andere auf der oberen Schmalseite des Wandelementes 26 befestigt ist. Die hakenförmigen Teile der Gegenstücke 37 und die nach unten hakenförmig umgebogenen Seiten des Schliessstückes 36 verlaufen jeweils in einem bestimmten Winkel keilförmig zueinander, so dass durch das Aufschieben des Schliessstückes 36 auf die beiden Gegenstükke 37 die beiden Wandelemente 20 und 26 zusammengedrückt werden.

Es ist ohne nähere Erläuterung verständlich, dass sich die beiden Wandelemente 20 und 26 mit zwei weiteren, hier nicht dargestellten Wandelementen zu einem geschlossenen rechteckigen Rahmen zusammensetzen lassen, dessen beide Stirnflächen offen sind. Zum Abdecken einer solchen Stirnfläche ist ein Wandelement 38 geeignet, das in Fig. 3 dargestellt ist. Dieses hat zwei Seitenflächen 39 und 40. Auf der oberen Seitenfläche 39 sind im ganzen Randbereich durchgehend umlaufende Federn 41 ausgebildet, die zwischen sich eine Nut 42 bilden. Nach aussen hin schliesst eine Halbnut 43 an, während der an die innere Feder 41 angrenzende Freiraum theoretisch auch die Funktion einer Halbnut erfüllt, denn er wird von der Halbfeder 34 des Wandelementes 26 und der Halbfeder 25 des Wandelementes 20 eingenommen, wenn das Wandelement 38 auf die durch die Wandelemente 20 und 26 und zwei weitere Wandelemente gebildete Stirnfläche aufgesetzt wird. Es greifen dann die beiden Federn 41 in die beiden Nuten 32 des Wandelementes 26 und die beiden Nuten 23 des Wandelementes 20 ein, während die Nut 42 von der Feder 33 des Wandelementes 26 und der Feder 24 des Wandelementes 20 ausgefüllt wird.

Somit ist auch zwischen dem Wandelement 38 und den angrenzenden Wandelementen 20 und 26 und den beiden hier nicht dargestellten Wandelementen eine über den ganzen Randbereich umlaufende Nut-Feder-Verbindung vorhanden, wobei auch das Andrücken des Wandelementes 38 an die übrigen Wandelemente mit Hilfe geeigneter Spannorgane erfolgt. In den Fig. 1 und 2 ist eine in der Seitenfläche 28 des Wandelementes 26 ausgebildete Nut 44 erkennbar. Zur Verbindung der Wandelemente wird in diese ein Spannband 45 eingelegt, das um das Wandelement 26 und ein auf der gegenüberliegenden Seite des Wandelementes 20 angrenzendes Wandelement umläuft und dabei auch das Wandelement 20 selbst umschliesst, das in dieser Umlaufebene liegt. Dies wird im einzelnen noch im Zusammenhang mit den Fig. 7 und 8 erläutert werden.

Zunächst wird jedoch die in den Fig. 4 und 5 dargestellte Ausführungsform beschrieben. Das eine Wandelement 46 hat zwei Seitenflächen 47 und 48. Die in den Fig. 4 und 5 vordere Schmalseite des Wandelementes 46 hat zwei Federn 49, zwischen denen eine Nut 50 verläuft. Zu den Seitenflächen 47 und 48 hin grenzt jeweils eine Halbnut 51 an.

An der einem angrenzenden Wandelement 52 zugewandten Schmalseite des Wandelementes 46 sind zwei Nuten 53 ausgebildet, zwischen denen sich eine Feder 54 erstreckt. Zu den Seitenflächen 47 und 48 des Wandelementes 46 hin schliessen sich auf dieser Schmalseite jeweils zwei Halbfedern 55 an. Im Übergangsbereich zwischen den beiden Schmalseiten gehen hier die beiden Nuten 53 in die beiden Federn 49 über, während die Feder 54 in die Nut 50 übergeht. Entsprechend ist ein Übergang zwischen den Halbfedern 55 und den Halbnuten 51 vorhanden.

Das Wandelement 52 hat zwei Seitenflächen 56 und 57. Die obere Schmalseite des Wandelementes 52 hat einen geschlossenen ebenen Verlauf und geht in die Seitenfläche 47 des Wandelementes 46 über, wenn dieses mit dem Wandelement 52 zusammengesetzt ist. Entlang der oberen Längskante des Wandelementes 52 verlaufen im Randbereich der Seitenfläche 56 zwei Federn 58, zwischen denen eine Nut 59 gebildet ist. Nach aussen hin schliessen jeweils wieder Halbnuten 60 an.

In letztere greifen die Halbfedern 55 des Wandelementes 46 ein, während die Feder 45 in die Nut 59 eingreift. Bei miteinander verbundenen Wandelementen 46 und 52 liegen die Federn 58 entsprechend in den Nuten 53. Wie Fig. 5 erkennen lässt, bleiben jeweils zwischen Federrücken und Nutboden noch Querschnittsteile 61 frei, in die eine hier nicht dargestellte Dichtung eingelegt werden kann.

Die Federn 58, die Nut 59 und die Halbnuten 60 sind zu der sich nach unten erstreckenden Schmalseite des Wandelementes 52 rechtwinklig abgebogen und setzen sich entlang dieser Schmalseite fort.

Wie die unterschiedlichen Ausführungen gemäss den Fig. 1 bis 3 einerseits und den Fig. 4 und 5 anderseits erkennen lassen, lässt sich die Verteilung von Nuten und Halbnuten bzw. Federn und Halbfedern bei den jeweiligen Verbindungsbereichen variieren. Auch können die Übergangsstellen in den Eckbereichen durchaus unterschiedlich angeordnet und ausgebildet werden.

Bei der Ausführungsform nach den Fig. 4 und 5 erfolgt das Zusammendrücken der Wandelemente 46 und 52 mit Hilfe von Spannschlössern 62, von denen eines in Fig. 5 erkennbar ist.

Eine nächste Ausführungsform der Erfindung ist in Fig. 6 dargestellt. Ein Wandelement 63 hat zwei Seitenflächen 64 und 65. In die Seitenfläche 65 ist ein Profil 66 etwa soweit eingelassen, wie es der Stärke seiner Grundplatte entspricht. Das Profil 66 hat zwei Federn 67, zwischen denen sich eine Nut 68 erstreckt.

Im Gegensatz zu den zuvor beschriebenen Ausführungsformen haben die Federn 67 nur in ihrem von der Grundplatte des Profils 66 ausgehenden ersten Querschnittsteil einen kegelstumpfförmigen Querschnitt, während der in Richtung auf den Federrücken anschliessende Querschnittsteil der Federn 67 dreieckförmig ist und den Federrükken zu einer Kante werden lässt. Die Nut 68 hat einen kreisförmig abgerundeten Querschnitt.

Ein rechtwinklig an das Wandelement 63 angrenzendes Wandelement 69 hat zwei Seitenflächen 70 und 71. Ein Profil 72 ist in die dem Wandelement 63 zugewandte Schmalseite eingelassen und bildet zwei Nuten 73, zwischen denen sich eine Feder 74 erstreckt. Zu den Aussenseiten des Profils 72 hin schliesst jeweils eine Halbfeder 75 an die Nuten 73 an.

Auch die Nuten 73 haben keinen einheitlich kegelstumpfförmigen Querschnitt, sondern sie sind im Bereich ihres Bodens im Querschnitt abgerundet. Die in der Mitte liegende Feder 74 hat im Bereich des Federrückens einen etwa dreieckigen, zugespitzten Querschnitt, so dass der Federrücken eine Längskante bildet. Im übrigen sind die Flanken der Feder 74 der Kreisform des Nutenverlaufs angepasst.

In die Nut 68 und in die Nuten 73 ist jeweils ein Dichtstreifen 76 eingelegt, der in unbelastetem Zustand einen kreisförmigen Querschnitt hat. Da die Rücken der Federn 67 und 74 kantenförmig sind und da in Querrichtung zu den jeweils benachbarten Nut- bzw. Federflanken hin ein freier Raum zur Verfügung steht, können die Dichtstreifen 76 in diesen ausweichen, wenn sie durch die Federrücken in ihren Nuten 68 bzw. 73 zusammengepresst werden. Hierdurch ergeben sich eine Vergrösserung der Dichtfläche und eine äusserst zuverlässige und hoch beanspruchbare Abdichtung. In diesem Fall werden die beim Gegeneinanderdrücken der Wandelemente 63 und 69 zu übertragenden Kräfte nur zwischen den äusseren Flanken der Federn 67 und den Flanken der Halbfedern 75 bzw. der an sie angrenzenden Nuten 73 übertragen.

Es sind in Fig. 6 ferner die Wandelemente 63 und 69 in Richtung auf die Nuten 68 und 73 durchsetzende Kanäle 77 eingezeichnet, um anzudeuten, dass in dem jetzt von den Dichtstreifen 76 eingenommenen Nutraum auch plastisches oder sogar aushärtbares Dichtungs- und/oder Kittmaterial eingespritzt werden kann, das sich durch Aufschäumen gleichmässig verteilt. Die Profile 66 und 72 können aus beliebigem Material bestehen, insbesondere Kunststoff oder Metall wie z.B. Aluminium. Die Verwendung der vorgefertigten Profile wird vielfach zu einer Vereinfachung und Verbilligung der Herstellung führen. In die Seitenfläche 64 des Wandelementes 63 ist ein Nutprofil 78 eingelassen, in das wiederum ein die Wandelemente 63 und 69 und gegebenenfalls mindestens ein weiteres Wandelement erfassendes Spannband 79 eingelegt ist. Das Nutprofil 78 ist mittels eines Deckstreifens 80 abgedeckt. Demgegenüber zeigt Fig. 13 insoweit eine Abwandlung, als anstelle des eingelassenen Profils 66 jetzt ein Profil 100 verwendet wird, das flach auf die Seitenfläche 65 aufgelegt ist und mittels einer an der Auflageseite ausgebildeten Feder 101 in einer entsprechend bemessenen Nut gehalten ist. Diese Befestigungsart führt zu einer geringeren Schwächung des Querschnitts des Wandelementes 63 und ist im übrigen einfacher und billiger, zumal die Feder 101 mit Hilfe entsprechender Querschnittshinterschneidungen auch durch Rastwirkung in ihrer Nut gehalten sein kann.

Nachdem bisher verschiedene Möglichkeiten für die Ausbildung und Anordnung der Nut-Feder-Verbindungen an den einzelnen Wandelementen beschrieben wurden, soll nachfolgend erläutert werden, wie sich mit diesen Wandelementen Körperelemente beliebiger Form zusammensetzen lassen. In den Fig. 7 und 8 ist ein Körperelement in Form eines Schrankes dargestellt. Als Rückseite dient das Wandelement 38, dessen Aufbau im Zusammenhang der Erläuterung der Fig. 3 beschrieben wurde. Als Seitenwände finden zwei Wandelemente 26 Anwendung, während als Bodenelement und als Deckplatte zwei Wandelemente 20 dienen. Der Aufbau der Wandelemente 20 und 26 wurde anhand der Fig. 1 und 2 beschrieben. Diese fünf Wandelemente sind zu einem Körperelement zusammengesetzt, das durch nur zwei Spannbänder 45 zusammengehalten werden kann, die in die Nuten 44 eingelegt sind. Es können aber auch zusätzlich oder alternativ Spannschlösser 62 oder aus einem Schliessstück 36 und zwei Gegenstücken 37 gebildete Keilverschlüsse Anwendung finden.

Durch Scharniere 81 ist ein als Tür dienendes Wandelement 82 an dem einen Wandelement 26 befestigt. Dieses ist in gleicher Weise wie das Wandelement 38 mit in der inneren Seitenfläche umlaufenden Nuten und Federn versehen, die mit den an den Schmalseiten der Wandelemente 20 und 26 umlaufenden Nuten und Federn eine allseitig schliessende Nut-Feder-Verbindung bilden, so dass ein wasser- und druckdichter Abschluss auch im Bereich des Wandelementes 82 gewährleistet ist. Hierbei ist es von besonderem Vorteil, dass die Kegelstumpfform der Nut-Feder-Verbindungen eine Schwenkbewegung des Wandelementes 82 beim Öffnen und Schliessen ohne Schwierigkeiten ermöglicht. Vorteilhaft ist es fernerhin, dass allein durch das Vertauschen des mit den Scharnieren 81 versehenen Wandelementes 26 mit dem anderen Wandelement 26 und durch entsprechendes Drehen dieser Wandelemente einschliesslich des Wandelementes 82 die Anschlagseite gewechselt werden kann, so dass das Wandelement 82 in der entgegengesetzten Schwenkrichtung geöffnet werden kann.

Es können aber auch die dem Wandelement 82 zugewandten Schmalseiten der Wandelemente 20 und 26 und die Innenseite des Wandelementes 82 als glatte ebene Flächen ausgebildet sein, wenn eine besonders gute Druckdichtigkeit nicht erforderlich ist. Im Randbereich in der Innenseite des Wandelementes 82 eingelassene Magnete 83 können dann zusammen mit den Spannbändern 45 einen Magnetverschluss bilden.

In den Fig. 9 und 10 ist eine nächste Ausführungsform der Erfindung dargestellt, bei der über den Umfang hin geschlossene Rahmenelemente 84 und 85 Anwendung finden. Das Rahmenelement 84 hat an seiner einen Stirnfläche 86 entlang der Schmalseiten umlaufende Nuten und Federn in einer Ausbildung und Anordnung, die denjenigen nach den Fig. 1 bis 6 entsprechen können. Während in die Stirnfläche 86 die Nuten und Federn 87 so eingelassen sind, dass sie mit der Stirnfläche 86 bündig abschliessen, sind an der gegenüberliegenden Stirnfläche 88 Nuten und Federn 89 so angeordnet, dass sie aus der Stirnfläche 88 hervorstehen.

Das an der einen Seite mittels eines Scharniers 90 mit dem Rahmenelement 84 verbundene Rahmenelement 85 hat an seiner Stirnfläche 91 Nuten und Federn 92, die in das Rahmenelement 85 eingelassen sind, so dass sie eine Art Muffenteil bilden, in den die Nuten und Federn 89 des Rahmenelementes 84 wie ein Steckteil eingreifen können. Auf der gegenüberliegenden Stirnfläche 93 des Rahmenelementes 85 sind Nuten und Federn 94 wieder in Form eines Steckteils hervorstehend ausgebildet, so dass ein nächstes Rahmenelement angesetzt werden kann. Die Rahmenelemente 84 und 85 werden an der dem Scharnier 90 gegenüberliegenden Seite mittels eines Spannschlosses 62 zusammengehalten. Die Stirnflächen 86 und 88 des Rahmenelementes 84 liegen in zueinander schräg verlaufenden Ebenen, so dass beispielsweise ein aus diesen Rahmenelementen gebildeter Schacht oder Leitungszug in seiner Verlaufsrichtung je nach Bedarf geändert werden kann.

In das Rahmenelement 85 z.B. kann auch eine hier nicht dargestellte Glasscheibe eingesetzt werden, wobei dann die Nuten und Federn 93 entfallen können und das Rahmenelement 85 als Fensterflügel dient. Fig. 10 zeigt eine Ansicht des im Querschnitt rechteckigen Rahmenelementes 85, gesehen in Richtung auf die Stirnfläche 93.

Die Fig. 11 und 12 zeigen jeweils teilweise ein im Querschnitt kreisförmig ausgebildetes, röhrenförmiges Wandelement 95, dessen eine Stirnfläche 96 an den Schmalseiten mit Nuten und Federn 97 versehen ist (Fig. 11). Die gegenüberliegende Stirnfläche 98 hat Nuten und Federn 99, die gegenüber den Nuten und Federn 97 in einer solchen Weise versetzt und angeordnet sind, dass sich mehrere Wandelemente 95 jeweils mit einer als Steckteil und einer als Muffenteil ausgebildeten Seite zusammensetzen lassen.

Es gehört auch in den Rahmen der Erfindung, ein relativ grossflächiges und sich im wesentlichen nur in einer Ebene erstreckendes Wandelement aus mehreren einzelnen Wandelementen mosaikartig zusammenzusetzen und die einzelnen Wandelemente mit einem in dieser Spannebene wirksamen Spannorgan zusammenzuhalten. Das Spannorgan kann hierbei als Spannband oder aber auch als Spannrahmen ausgebildet sein, der ganz oder teilweise aus starren und in Spannlage auf Zug beanspruchten Leisten gebildet ist.

Bezugsziffernliste:

| | |
|---|---|
| 20 Wandelement | 60 Halbnut |
| 21 Seitenfläche | 61 Querschnittsteil |
| 22 Seitenfläche | 62 Spannschloss |
| 23 Nut | 63 Wandelement |
| 24 Feder | 64 Seitenfläche |
| 25 Halbfeder | 65 Seitenfläche |
| 26 Wandelement | 66 Profil |
| 27 Seitenfläche | 67 Feder |
| 28 Seitenfläche | 68 Nut |
| 29 Feder | 69 Wandelement |
| 30 Nut | 70 Seitenfläche |
| 31 Halbnut | 71 Seitenfläche |
| 32 Nut | 72 Profil |
| 33 Feder | 73 Nut |
| 34 Halbfeder | 74 Feder |
| 35 Querschnittsteil | 75 Halbfeder |
| 36 Schliessstück | 76 Dichtstreifen |
| 37 Gegenstück | 77 Kanal |
| 38 Wandelement | 78 Nutprofil |
| 39 Seitenfläche | 79 Spannband |
| 40 Seitenfläche | 80 Deckstreifen |
| 41 Feder | 81 Scharnier |
| 42 Nut | 82 Wandelement |
| 43 Halbnut | 83 Magnet |
| 44 Nut | 84 Rahmenelement |
| 45 Spannband | 85 Rahmenelement |
| 46 Wandelement | 86 Stirnfläche |
| 47 Seitenfläche | 87 Nuten und Federn |
| 48 Seitenfläche | 88 Stirnfläche |
| 49 Feder | 89 Nuten und Federn |
| 50 Nut | 90 Scharnier |
| 51 Halbnut | 91 Stirnfläche |
| 52 Wandelement | 92 Nuten und Federn |
| 53 Nut | 93 Stirnfläche |
| 54 Feder | 94 Nuten und Federn |
| 55 Halbfeder | 95 Wandelement |
| 56 Seitenfläche | 96 Stirnfläche |
| 57 Seitenfläche | 97 Nuten und Federn |
| 58 Feder | 98 Stirnfläche |
| 59 Nut | 99 Nuten und Federn |
| | 100 Profil |
| | 101 Feder |

**Patentansprüche**

1. Aus einzelnen Wandelementen (20, 26, 38; 46, 52; 63, 65, 69, 82, 84, 85, 95) zusammengesetztes Körperelement mit an den Stossstellen ausgebildeten Nut-Feder-Verbindungen und mit Spannorganen (36, 45, 62, 79), mittels derer die Nut-Feder-Verbindungen in der Verbindungsrichtung zusammengehalten sind, wobei die Nuten (23, 30, 32, 42; 50, 58; 68, 73) und Federn (24, 29, 33, 41; 49, 59; 67, 74) jeweils einen angenähert trapezförmigen Querschnitt haben, die Nut-Feder-Verbindung durchgehend über die Ränder der zu verbindenden Wandelemente verläuft und in bestimmten Eckbereichen von Wandelementen eine Feder (33, 49) in eine Nut (30, 53) und eine Nut (32, 50) in eine Feder (29, 54) derart übergehen, dass an den Stirnseiten angeordnete Nut-Feder-Verbindungen in Nut-Feder-Verbindungen an den angrenzenden Stirn- bzw. Seitenflächen überwechseln, dadurch gekennzeichnet, dass die Nuten und Federn so bemessen sind, dass die vom Spannorgan ausgeübte Kraft im wesentlichen zwischen den Flanken der Nuten und Federn übertragen wird, dass jeweils eine Feder (29, 49) einer Seitenfläche (27) bzw. Stirnfläche in eine Nut (32) bzw. Nuten (53) an einer angrenzenden Stirnseite bzw. eine Nut (30, 50) an einer Seitenfläche (27) bzw. Stirnfläche in eine Feder (33, 54) an der angrenzenden Stirnseite derart übergeht, dass die Übergänge von den Nutenwänden zu den entsprechenden Federrücken in einem Winkel von 45° verlaufende, ei-nen kontinuierlichen Nutenquerschnitt im Über-gangsbereich gewährleistende Wangen bilden, und dass die Querschnitte zumindest der mittleren Nuten und Federn so bemessen sind, dass bei aneinanderliegenden Flanken der Nuten und Federn zwischen dem Nutboden und den Federrücken ein Abstand für einen Dichtstreifen (76) verbleibt.

2. Körperelement nach Anspruch 1, dadurch gekennzeichnet, dass die Teile einer Nut-Feder-Verbindung jeweils Bestandteil eines vorgefertigten Profils (100) sind.

3. Körperelement nach Anspruch 2, dadurch gekennzeichnet, dass die Rückseite des vorgefertigten Profils (100) eine in eine entsprechende Nut im Eckwandelement (63) eingreifende Feder (101) aufweist, während es im übrigen flach auf der betreffenden Seitenfläche (65) des Eckwandelements (63) aufliegt.

**Claims**

1. A structural member composed of individual wall elements (20, 26, 38, 46, 52; 63, 65, 69, 82, 84, 85, 95) with groove and tongue joints constructed at the joint abutments and with clamping members (36, 45, 62, 79) by means of which the groove and tongue joints are held together in the connecting direction, the grooves (23, 30, 32, 42; 50, 58; 68, 73) and tongues (24, 29, 33, 41; 49, 59; 67, 74) in each case having an approximately trapezoidal cross section, the groove and tongue joint extending continuously over the edges of the wall elements to be connected and in certain corner regions of corner wall elements a tongue (33, 49) merges into a groove (30, 53) and a groove (32, 50) merges into a tongue (29, 54) in such a way that groove and tongue joints arranged on the front ends change over into groove and tongue joints on the adjacent front or lateral faces, characterised in that the grooves and tongues are dimensioned such that the force exerted by the clamping elements is substantially transmitted between the flanks of the grooves and tongues, in that in each case a tongue (29, 49) of a lateral face (27) or front face merges into a groove (32) or grooves (53) on an adjacent front face or a groove (30, 50) on a lateral face (27) or front face merge into a tongue (33, 54) on the adjacent front face in such a way that the transitions from the groove walls to the corresponding tongue backs form edge pieces extending at an angle of 45° and ensuring a continuous groove cross section in the transition region, and in that the cross sections at least of the central grooves (30, 32) and tongues (29, 33) are dimensioned such that a space for a sealing strip (76) remains between the groove floor and the tongue back in abutting flanks of the grooves and tongues.

2. A structural member according to claim 1, characterised in that the parts of a groove and tongue joint in each case are components of a prefabricated profile (100).

3. A structural member according to claim 2, characterised in that the rear of the prefabricated profile (100) comprises a tongue (101) engaging in a corresponding groove in the corner wall element (63), while it moreover rests flat on the respective lateral face (65) of the corner wall element (63).

**Revendications**

1. Elément de corps composé d'éléments de parois (20, 26, 38, 46, 52; 63, 65, 69, 82, 84, 85, 95) indépendants avec des liaisons par tenon et mortaise formées aux emplacements de joints et avec des organes de serrage (36, 45, 62, 79) grâce auxquels les liaisons par tenon et mortaise sont maintenues ensemble dans la direction de liaison, les mortaises (23, 30, 32, 42; 50, 58; 68, 73) et les tenons (24, 29, 33, 41; 49, 59; 67, 74) présentant respectivement une section transversale sensiblement trapézoïdale, la liaison par tenon et mortaise s'étendant en continu au-dessus des arêtes des éléments de paroi à relier et, dans des zones d'angle déterminées d'éléments de parois d'angles, un tenon (33, 49) se transformant en une rainure (30, 53) et une rainure (32, 50) se transformant en un tenon (29, 54) de telle manière que les liaisons par tenon et mortaise disposées dans les surfaces frontales se transforment en liaisons par tenon et mortaise dans les surfaces frontales ou latérales adjacentes, caractérisé en ce que les mortaises et les tenons sont dimensionnés de manière que la force exercée par l'organe de serrage est transmise essentiellement entre les flancs des mortaises et des tenons, que respectivement un tenon (29, 49) d'une surface latérale (27) ou d'une surface frontale se transforme en une mortaise (32) ou des mortaises (53) sur une surface frontale adjacente, ou une rainure (30, 50) d'une surface latérale (27) ou d'une surface frontale se transforme en un tenon (33, 54) de la surface frontale adjacente de telle manière que les transitions des parois de mortaises en les dos de tenons correspondants forment des faces s'étendant selon un angle de 45° en garantissant une section transversale de mortaise continue dans la zône de transition, et que les sections transversales d'au moins les mortaises (30, 32) et les tenons (29, 33) centraux sont dimensionnés de manière à conserver, pour les flancs adjacents des mortaises et des tenons, un espace pour une bande d'étanchéïté (76) entre le fond de la mortaise et le dos du tenon.

2. Elément de corps selon la revendication 1, caractérisé en ce que les parties d'une liaison par tenon et mortaise font partie respectivement d'un profilé préfabriqué (100).

3. Elément de corps selon la revendication 2, caractérisé en ce que la face postérieure du profilé préfabriqué (100) présente un tenon (101) engagé dans une mortaise correspondante dans l'élément de paroi d'angle (63), en reposant pour le reste à plat sur la surface latérale (65) correspondante de l'élément de paroi d'angle (63).

FIG. 1

FIG. 2

FIG. 3

FIG. 6

FIG. 4

FIG. 5

FIG. 7

FIG. 8

FIG. 9

FIG. 10

FIG. 11

FIG. 12

FIG. 13